# FASCICULE DE BREVET EUROPEEN

(11) **EP 0 582 504 B1**
(45) Date de publication et mention de la délivrance du brevet: **10.01.1996**
(21) Numéro de dépôt: 93401925.8
(22) Date de dépôt: 23.07.1993
(51) Int. Cl.: G21C 13/036

(54) **Procédé et dispositif d'usinage de la surface interne d'une pièce tubulaire et notamment d'un adaptateur fixé sur le couvercle de la cuve d'un réacteur nucléaire à eau sous pression**
Verfahren und Vorrichtung zum Bearbeiten der Innenseite eines rohrförmigen Teiles, insbesondere eines auf einem Druckwasserkernreaktordeckel befestigten Adapters
Method and device for machining the inner surface of a tubular element, in particular of an adapter fixed to the cover of a nuclear pressurized water reactor vessel

(30) Priorité: 06.08.1992 FR 9209789
(43) Date de publication de la demande: 09.02.1994
(73) Titulaire: FRAMATOME, F-92400 Courbevoie (FR)
(72) Inventeur: Batistoni, Michel, F-71640 Le Bourg (FR); Pontvianne, Pierre, F-62400 Bethune (FR)
(74) Mandataire: Bouget, Lucien

(56) Documents cités:
- WO-A-92/03269
- GB-A- 2 094 679
- GB-A- 2 236 065
- KERNENERGIE vol. 15, no. 8, août 1972, BERLIN, DE, pages 264-269, A. SCHÖNHERR: 'Überblick über die Durchführung und die Ergebnisse der teilweisen Reaktorrevision 1971 im Kernkraftwerk Rheinsberg'
- FEINWERKTECHNIK + MESSTECHNIK vol. 99, no. 6, juin 1991, MUENCHEN DE, pages 81-86, URS W. HUNZIKER-JOST: 'Wasser schneidet scharf'
- 8TH INTERNATIONAL SYMPOSIUM ON JET CUTTING TECHNOLOGY 9 Septembre 1986, DURHAM, ENGLAND, pages 297-308, N. HASHISH: 'Aspects or abrasive-waterjet performance optimization'

## Description

L'invention concerne un procédé d'usinage avec enlèvement de matière sur une profondeur contrôlée, de la surface interne cylindrique d'une pièce tubulaire et en particulier de la surface intérieure d'un adaptateur traversant le couvercle de la cuve d'un réacteur nucléaire.

Les réacteurs nucléaires à eau sous pression comportent généralement une cuve renfermant le coeur du réacteur qui est plongé dans l'eau sous pression de refroidissement du réacteur. La cuve du réacteur de forme générale cylindrique comporte un couvercle de forme hémisphérique qui peut être rapporté sur sa partie supérieure.

Le couvercle est percé d'ouvertures au niveau de chacune desquelles est fixée par soudure une pièce tubulaire de traversée constituant un adaptateur assurant le passage et la commande de déplacement d'un prolongateur d'une grappe de contrôle de la réactivité du coeur ou un passage de traversée d'un moyen de mesure à l'intérieur du coeur, tel qu'une colonne de thermocouple.

Sur les parties d'extrémité de chacun des adaptateurs, sont fixés les mécanismes de commande de déplacement des grappes de contrôle de la réactivité du coeur.

A l'intérieur de chacune des traversées tubulaires du couvercle de cuve est fixée, dans une position coaxiale par rapport à la pièce tubulaire de traversée et avec un certain jeu radial, une manchette thermique qui comporte une partie élargie diamétralement venant reposer sur une portée d'appui élargie diamétralement située à la partie supérieure de l'alésage de la pièce tubulaire de traversée la manchette thermique est montée libre en rotation à l'intérieur de la traversée.

Les prolongateurs des barres de commande de la réactivité du réacteur nucléaire et les colonnes de thermocouples traversent le couvercle de cuve à l'intérieur des manchettes thermiques qui sont elles-mêmes disposées coaxialement à l'intérieur des adaptateurs des barres de commande ou plus généralement à l'intérieur des pièces tubulaires de traversée du couvercle.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire et, le cas échéant, des réparations de défauts qui ont pu être décelés.

En particulier, il peut être nécessaire de contrôler l'état des pièces de traversée du couvercle de la cuve pour s'assurer de l'intégrité de ces pièces après un certain temps de fonctionnement du réacteur, en particulier dans la zone où ces pièces de traversée sont soudées sur le couvercle de cuve.

Dans le cas où des défauts sont décelés sur la surface interne d'une pièce de traversée, ces défauts doivent être réparés, par exemple en déposant une couche d'un métal tel que du nickel sur la surface interne de la pièce de traversée, dans la zone présentant les défauts, ou encore en réalisant un affouillement sur une certaine profondeur, par usinage avec enlèvement de matière, de la zone présentant des défauts et un rechargement de cette zone par un métal de remplacement exempt de défaut.

Les opérations de contrôle et/ou de réparation des adaptateurs du couvercle de la cuve d'un réacteur nucléaire doivent être effectuées par l'intérieur de l'alésage de la pièce de traversée et nécessitent en conséquence un démontage de la manchette thermique, pour accéder à la surface intérieure de l'alésage de la traversée.

Ces contrôles et réparations doivent être effectués lors d'un arrêt du réacteur nucléaire, le couvercle de la cuve étant démonté.

Le démontage de la manchette thermique nécessite des opérations complexes dans la mesure où l'élargissement de la manchette thermique reposant sur une portée d'appui disposée à la partie supérieure de l'adaptateur interdit un démontage de la manchette par traction vers le bas, sur sa partie inférieure accessible en-dessous du couvercle.

En outre, il n'est pas possible non plus de démonter la manchette par traction vers le haut dans la mesure où les mécanismes de commande de grappes qui sont fixés par vissage et par soudage sur les parties supérieures des adaptateurs interdisent le passage de la manchette thermique.

On a donc proposé dans la demande de brevet n° 92-02405 déposée aux noms de FRAMATOME et ELECTRICITE DE FRANCE - Service National, le 28 février 1992, de réaliser le contrôle de la surface interne de la pièce de traversée et éventuellement la réparation de cette pièce, dans le cas où des défauts sont décelés, à travers une fente de direction longitudinale usinée dans la manchette thermique et traversant sa paroi.

Dans le cas où la réparation est réalisée par dépôt d'une couche de nickel sur la surface intérieure de l'adaptateur, dans la zone présentant des défauts, cette réparation nécessite obligatoirement le démontage de la manchette thermique. En outre, le dépôt électrolytique de nickel en lui-même est une opération longue et donc coûteuse. La durée d'intervention sur les adaptateurs d'un couvercle de cuve pour effectuer des réparations ou éventuellement un traitement préventif par dépôt de nickel sur la surface intérieure de l'adaptateur au niveau de la zone de soudure est de l'ordre de dix jours.

En outre, la réparation ou le traitement préventif ainsi effectué ne réalise pas une élimination du métal fissuré et des contraintes pouvant entraîner une fissuration sous le revêtement de nickel.

Dans le cas où la réparation est réalisée par affouillement et rechargement, il peut être possible dans certains cas d'effectuer ces opérations à travers une fente usinée dans la manchette thermique et utilisée pour le contrôle de la surface intérieure de l'adaptateur. Cependant, on ne connaît pas jusqu'ici de procédé et de dispositif qui permettent de réaliser de manière simple, rapide et parfaitement contrôlée, avec un excellent état de surface, l'affouillement de la surface présentant des défauts, c'est-à-dire l'élimination du matériau de la pièce sur une profondeur limitée et parfaitement contrôlée de manière à générer une nouvelle surface exempte de défauts.

On ne connaît pas non plus de procédé qui permette de réaliser simultanément l'élimination de la matière présentant des défauts et le détensionnement de la pièce sur une certaine profondeur.

De manière plus générale, on ne connaissait pas de procédé d'usinage d'une surface interne cylindrique d'une pièce tubulaire en particulier d'une pièce métallique qui soit à la fois rapide et efficace et qui permette d'obtenir une nouvelle surface ayant des caractéristiques géométriques et physiques parfaitement définies ainsi qu'un détensionnement de la pièce en-dessous de la surface usinée.

Le but de l'invention est donc de proposer un procédé d'usinage de la surface interne cylindrique d'une pièce tubulaire telle qu'un adaptateur fixé sur le couvercle de la cuve d'un réacteur nucléaire à eau sous pression, avec enlèvement de matière sur une profondeur contrôlée, pour générer une nouvelle surface présentant des caractéristiques géométriques et physiques déterminées, par érosion sous l'effet d'un jet de liquide à grande vitesse renfermant une matière abrasive pulvérulente, procédé qui soit rapide, efficace et qui permette d'obtenir un excellent état de surface et un détensionnement du métal en-dessous de la surface usinée.

Dans ce but, on dirige le jet de liquide vers la surface de la pièce avec un angle d'incidence avec la surface de la pièce compris entre 30 et 90°, on déplace le jet de manière à balayer la surface interne de la pièce tubulaire et on réalise aux moins deux passes successives d'usinage, la vitesse de balayage de la surface de la pièce étant croissante d'une passe à la suivante.

Le procédé suivant l'invention peut être utilisé en particulier, pour réaliser des réparations ou des traitements préventifs de la surface intérieure d'un adaptateur traversant le couvercle de la cuve d'un réacteur nucléaire.

Un autre but de l'invention est l'utilisation d'un dispositif d'usinage de la surface interne d'un adaptateur traversant le couvercle de la cuve d'un réacteur nucléaire à eau sous pression conforme à l'objet de la revendication 15.

Afin de bien faire comprendre l'invention, on va maintenant décrire, à titre d'exemple non limitatif, en se référant aux figures jointes en annexe, plusieurs modes de mise en oeuvre d'un procédé suivant l'invention.

La figure 1 est une vue schématique d'un outil d'usinage par jet d'eau avec balayage d'une surface.

La figure 2 est une vue en plan de la surface de la pièce montrant la trajectoire de balayage d'un jet d'usinage.

La figure 3 est une vue en coupe axiale d'un adaptateur et d'un dispositif d'usinage au jet de la surface interne de l'adaptateur, suivant un premier mode de réalisation.

La figure 4 est une vue en coupe axiale d'un adaptateur et d'un dispositif d'usinage au jet de la surface interne de l'adaptateur, suivant un second mode de réalisation.

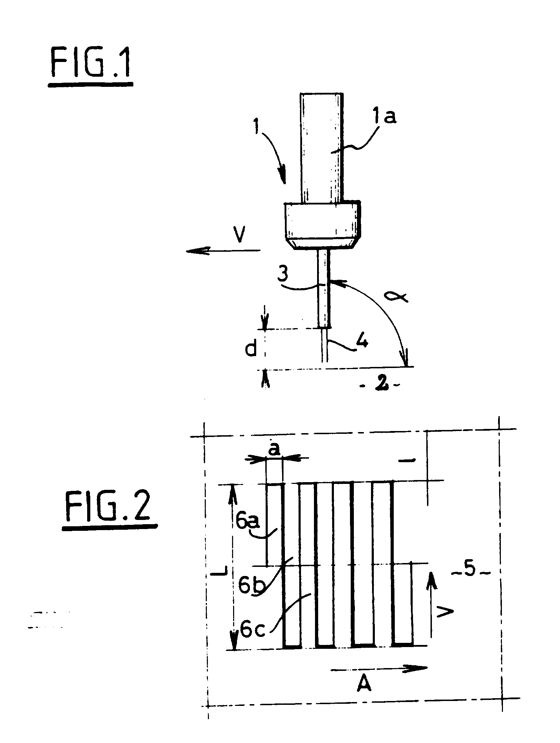

Sur la figure 1, on voit un outil constitué par une buse 1 dont le canon d'éjection d'un jet d'eau sous pression 3 est dirigé vers la surface d'une pièce métallique 2 sur laquelle on réalise une opération d'usinage par enlèvement d'une couche superficielle généralement désignée par les techniciens sous l'appellation de "pelage".

La buse 1 comporte un corps la ayant une cavité centrale communiquant avec l'alésage du canon 3 constituant la pièce de sortie de la buse 1 par l'intermédiaire d'une ouverture calibrée. De l'eau sous très forte pression est introduite dans la cavité du corps la de la buse, de manière qu'un jet 4 à très grande vitesse se forme à la sortie du canon 3 et vienne frapper la surface de la pièce 2 en vis-à-vis de laquelle est située l'extrémité du canon 3.

De manière à régler l'opération d'usinage d'une couche superficielle de la pièce 2 ou pelage, plusieurs paramètres doivent être choisis en fonction de l'opération à réaliser et de la nature de la pièce 2.

Ces paramètres sont relatifs en particulier au liquide constituant le jet 4 qui est généralement de l'eau contenant des particules abrasives solides.

Ces paramètres sont la pression du liquide destiné à constituer le jet 4, la vitesse du jet de -liquide déterminant l'énergie d'impact au contact de la pièce 2, le débit massique de particules transportées par le liquide et la nature de ces particules.

D'autres paramètres de définition du procédé sont relatifs à la forme et à la position de la buse 1.

Un paramètre important est constitué par l'angle a d'inclinaison de la buse par rapport à la surface de la pièce 2 au point d'impact ; l'angle α est toujours compris entre 30° et 90° (incidence normale) ; un second paramètre est la distance d de l'extrémité de la buse à la surface de la pièce 2.

D'autres paramètres sont relatifs au balayage de la pièce. Comme il sera expliqué plus loin, on peut envisager divers types de balayage avec un nombre de passes quelconque et généralement avec un certain recouvrement.

Parmi les paramètres relatifs au balayage on prend en compte en particulier la vitesse V de balayage de la surface qui est la vitesse de déplacement de la buse parallèlement à la surface de la pièce 2.

Dans le cas d'une pièce en un alliage de nickel telle qu'un adaptateur du couvercle de cuve d'un réacteur nucléaire, la vitesse du jet d'eau est fixée à une valeur voisine de 600 m/s, la pression d'eau est de 3500 bars et le débit massique des particules dans le jet d'eau est compris entre 400 et 800 g/mn.

La distance d est fixée à une valeur de quelques millimètres et la vitesse V est supérieure à 0,1 m/mn et de préférence comprise entre 1 et 10 m/mn.

Selon l'invention, on effectue l'usinage en au moins deux passes successives caractérisées par une vitesse de balayage de la pièce qui est réglée de manière àobtenir des conditions d'usinage et en particulier la profondeur d'usinage voulues. La vitesse de balayage est croissante d'une passe d'usinage à la suivante.

Les paramètres sont réglés de manière à réaliser en au moins deux passes l'usinage de la couche superficielle de la pièce 2, sur une profondeur qui peut être de l'ordre de 1 à 2 mm, et avec un excellent état de la surface résultant de l'usinage.

Il est nécessaire que la vitesse du jet d'eau soit fixée à une valeur suffisante et dans tous les cas cette vitesse doit être supérieure à 100 m/s.

La pression du liquide destiné à constituer le jet peut être réglée dans un certain intervalle mais cette pression ne doit pas être inférieure à 2000 bars.

Le débit massique, la nature et la granulométrie des particules solides transportées par le jet de liquide peuvent être modifiés d'une passe d'usinage à la suivante ; dans tous les cas, le débit massique se traduit par une concentration très faible des particules dans le jet de liquide, comme il sera expliqué plus loin.

Les particules peuvent être constituées par des matières telles que l'alumine, le carbure de silicium, le zircon, l'olivine ou le grenat.

La taille des particules peut être comprise entre 100 et 1000 µm.

Le jet de liquide peut être plat ou circulaire et, suivant les cas, sa largeur ou son diamètre peut être compris entre 1 et 2 mm.

La vitesse de balayage doit être fixée à une valeur de plusieurs mètres par minute dans le cas de l'usinage de la couche superficielle d'une pièce en Inconel. Du fait des dimensions réduites des surfaces des pièces à traiter, il est nécessaire de réaliser un balayage périodique, pour obtenir la vitesse de déplacement souhaitée et pour traiter l'ensemble de la surface voulue de la pièce.

Sur la figure 2, on a représenté la surface 5 d'une pièce sur laquelle on réalise l'élimination d'une couche superficielle par le procédé suivant l'invention.

La surface 5 est la développée de la surface intérieure d'un adaptateur traversant le couvercle de cuve d'un réacteur nucléaire.

Le balayage de la zone de la surface 5 dans laquelle on réalise l'usinage par jet d'eau est effectué suivant des bandes de longueur L et suivant la direction d'avance A qui correspond à la direction circonférentielle de la paroi intérieure, d'une pièce tubulaire telle qu'un adaptateur.

La buse et le jet d'eau sont déplacés à la vitesse de balayage ou de coupe V, dans une direction perpendiculaire à la direction d'avance A et successivement dans un sens et dans l'autre, de manière à couvrir la bande de largeur L. Entre deux déplacements dans des sens différents, la buse est avancée d'un pas de largeur a dans la direction A.

On obtient ainsi des bandes successives juxtaposées 6a, 6b, 6c de largeur a dans lesquelles la couche superficielle de la pièce a été creusée par le jet d'eau chargé en particules abrasives.

La largeur active du jet d'eau correspond à la largeur de la zone d'impact du jet sur la surface 5 de la pièce.

Le balayage à vitesse V est réalisé suivant la direction axiale de l'adaptateur, dans une zone de longueur L et l'avance est réalisée par déplacement circonférentiel de la buse par pas de largeur a.

L'intervalle de temps nécessaire pour effectuer le balayage suivant la longueur L dans les deux sens est appelé fréquence de balayage f.

Les paramètres relatifs au jet de liquide et à son pouvoir d'érosion ainsi que les paramètres relatifs au balayage sont interdépendants et sont fixés de manière à obtenir des caractéristiques géométriques (forme et état de surface) et des caractéristiques physiques (dureté, état de contrainte) de la surface usinée qui soient satisfaisantes.

Il est à remarquer que la vitesse de balayage ou vitesse de coupe peut être fixée à une valeur importante du fait du balayage alternatif, ce qui est favorable en ce qui concerne la vitesse et la qualité de l'usinage.

L'usinage par enlèvement de matière est réalisé suivant des sillons en creux successifs qui se recouvrent latéralement pour constituer les bandes 6a, 6b, 6c ... visibles sur la figure 2. Le taux de recouvrement peut être variable suivant les caractéristiques de l'usinage recherchées et l'usinage peut être réalisé en une ou plusieurs passes.

En plus de ces avantages, le procédé suivant l'invention permet la mise en compression d'une couche superficielle (jusqu'à environ 500 µm de profondeur) du métal usiné, ce qui permet de détensionner le métal de la pièce, de la même façon que lors d'une opération de martelage par des particules en suspension dans un gaz.

Un tel traitement permet de réduire la tendance à la fissuration du métal.

Dans le cas d'un adaptateur traversant le couvercle de cuve d'un réacteur nucléaire, il est ainsi possible de réaliser simultanément l'enlèvement d'une couche superficielle comportant des fissures et le traitement préventif de la zone de l'adaptateur située au voisinage de la soudure de fixation sur le couvercle pour permettre son détensionnement et améliorer sa résistance à la fissuration.

Le balayage de la surface de la pièce peut être réalisé non seulement de la manière qui a été décrite, avec déplacement par pas successifs de la buse par rapport à la surface de la pièce dans la direction A pour obtenir des zones usinées juxtaposées de forme rectangulaire mais encore avec un déplacement continu dans la direction A, de manière à obtenir une zone usinée de forme sinusoïdale ou de forme pseudo-sinusoïdale.

Dans le cas de l'usinage de la surface intérieure d'un adaptateur à travers une fente réalisée dans la manchette thermique de l'adaptateur, l'usinage complet de la zone à traiter peut être obtenu soit par un déplacement hélicoïdal engendré par un déplacement rectiligne de la buse selon la longueur de la fente combiné à une rotation de la manchette thermique autour de son axe, soit par des déplacements verticaux successifs de la buse au travers de la fente de la manchette thermique associés à un mouvement lent de rotation de la manchette.

L'état de surface de la paroi de l'adaptateur et l'état de contrainte du métal sous la surface usinée peuvent être ajustés en fixant les conditions relatives au balayage.

Il est à remarquer que les débits massiques de particules abrasives entraînées par le jet de liquide sous pression se traduisent par une densité très faible des particules solides à l'intérieur du jet de liquide, du fait de la très grande vitesse et du débit important de ce jet de liquide.

En moyenne, la densité est d'une particule pour quelques millimètres de longueur linéaire du jet de liquide. Du fait que la distance entre l'extrémité de la buse et la surface de la pièce à traiter est de l'ordre de quelques millimètres, les particules abrasives ne sont pas susceptibles de perturber des mesures par ultrasons qui peuvent être effectuées en utilisant le jet d'eau sous pression lui-même comme liquide de couplage. Il est donc possible d'associer un transducteur ultrasonore à la buse d'éjection du jet de liquide, de manière à effectuer des mesures telles que des mesures très précises de profondeur d'usinage en utilisant le liquide du jet abrasif comme liquide de couplage.

Il est également possible de prévoir un second jet parallèle au jet d'usinage pour effectuer le couplage d'un transducteur ultrasonore avec la surface en cours d'usinage.

Dans tous les cas on peut obtenir des mesures très précises concernant la profondeur et la régularité d'usinage.

Il est donc possible soit de prérégler les paramètres du jet et les paramètres du balayage pour obtenir l'usinage voulu, soit de réguler certains de ces paramètres en cours d'usinage, par exemple en fonction d'une mesure de profondeur d'usinage.

Il est à remarquer qu'il est possible d'effectuer un usinage à une profondeur variable, avec un profil parfaitement déterminé, en modulant certains des paramètres d'usinage, tels que des paramètres du jet ou des paramètres du balayage.

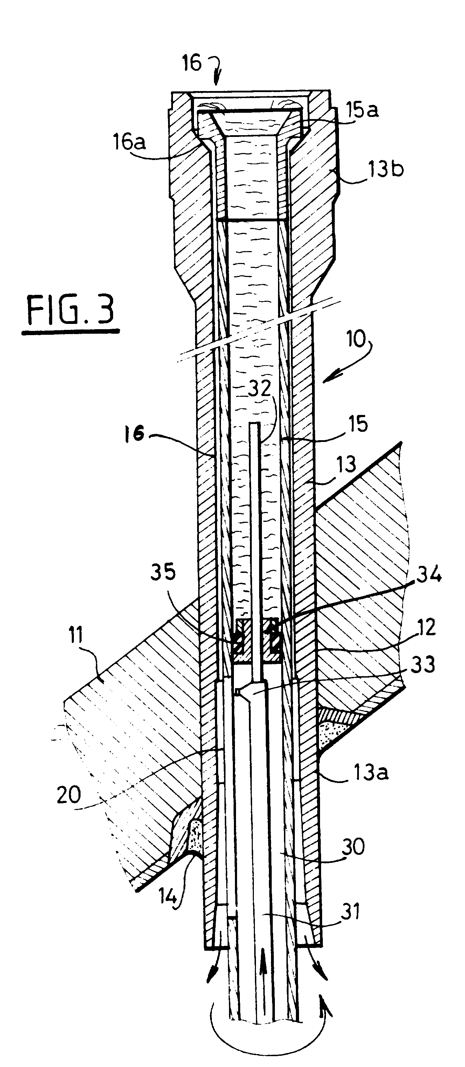

On va maintenant décrire, en se référant à la figure 3, un adaptateur traversant le couvercle de la cuve d'un réacteur nucléaire et l'application du procédé suivant l'invention à l'élimination d'une couche superficielle interne de cet adaptateur, en particulier dans sa zone de soudure sur le couvercle.

Sur la figure 3, on a représenté un adaptateur 10 traversant le couvercle 11 d'une cuve de réacteur nucléaire. Le couvercle 11 est traversé par une ouverture 12 à l'intérieur de laquelle est fixée une pièce tubulaire 13 constituant un adaptateur permettant le passage d'un prolongateur assurant le déplacement d'une grappe de contrôle à l'intérieur de la cuve du réacteur nucléaire.

L'adaptateur 13 de forme tubulaire comporte une partie courante 13a dont le diamètre correspond au diamètre de l'ouverture 12 et qui est fixée par un cordon de soudure annulaire 14 sur la face interne inférieure du couvercle 11 et une partie supérieure élargie diamétralement 13b située à l'extérieur et au-dessus du couvercle de cuve 11.

Une manchette thermique 15 de forme tubulaire est disposée coaxialement à l'intérieur de l'alésage interne de l'adaptateur 13.

La manchette thermique 15 comporte une partie supérieure 15a élargie diamétralement venant reposer sur une surface d'appui 16a de forme tronconique constituant la partie supérieure de l'alésage interne 16 de l'adaptateur tubulaire 13.

La manchette 15 est montée avec un certain jeu radial et reste libre en rotation à l'intérieur de l'adaptateur 13.

Le mécanisme de commande de l'adaptateur 13 (non représenté) permettant le déplacement du prolongateur et de la grappe de commande traversant le couvercle à l'intérieur de l'adaptateur est fixé sur la partie supérieure élargie 13b de l'adaptateur 13.

La manchette thermique 15 est solidaire à sa partie inférieure, en-dessous du couvercle de cuve et de - la partie inférieure de l'adaptateur 13, d'un cône de centrage permettant, lors de la pose du couvercle 11 sur la cuve du réacteur, le centrage des extrémités des tiges de commande de grappes constituant des prolongateurs de ces grappes engagés dans la direction verticale à l'intérieur du coeur du réacteur disposé dans la cuve.

Après un certain temps de fonctionnement du réacteur, il est souhaitable de vérifier l'état des adaptateurs 13 traversant le couvercle de cuve et en particulier de la partie des adaptateurs au niveau de laquelle est réalisée la fixation sur le couvercle de cuve par l'intermédiaire d'une soudure annulaire telle que 14.

Ce contrôle visant essentiellement la surface interne de l'alésage 16 de l'adaptateur dans la zone de soudure 14 peut être réalisé par un procédé ultrasonore en utilisant un faisceau d'ultrasons émis par une sonde disposée en vis-à-vis de la surface intérieure de l'alésage de l'adaptateur.

On a proposé, dans une demande de brevet 92-02405 déposée par les Sociétés FRAMATOME et ELECTRICITE de FRANCE - Service National, de réaliser le contrôle de la zone de soudure 14 de l'adaptateur 13 en réalisant une fente telle que 20 à travers la paroi de la manchette thermique 15 et sur une certaine longueur axiale.

L'usinage de la fente peut être effectué en utilisant un jet abrasif, en plusieurs passes successives et en fixant la capacité d'usinage du jet à une valeur faible pendant la dernière passe, au cours de laquelle le jet débouche en vis-à-vis de l'adaptateur.

Le contrôle peut être réalisé en utilisant une sonde à ultrasons dont le faisceau traverse la fente pour parvenir à la surface intérieure de l'adaptateur. Le balayage de la surface interne de l'adaptateur est réalisé en déplaçant la sonde dans la direction longitudinale de la fente et en déplaçant la chemise thermique en rotation autour de son axe à l'intérieur de l'adaptateur.

Dans le cas où des défauts sont décelés par le contrôle ultrasonore, une réparation doit être effectuée.

Comme indiqué plus haut, cette réparation peut être réalisée en usinant la couche superficielle de l'adaptateur dans la zone défectueuse, par le procédé suivant l'invention utilisant un jet abrasif à très grande vitesse.

Sur la figure 3, on voit un dispositif d'usinage désigné de manière générale par le repère 30 et permettant d'effectuer l'usinage au jet selon le procédé de l'invention, d'une partie de la surface interne de l'adaptateur 13, à travers la fente 20.

Le dispositif 30 comporte un tube externe 31 et un tube interne 32 monté à l'intérieur du tube externe 31 dans une disposition coaxiale. Le tube interne 32 comporte une partie supérieure à l'extérieur du tube externe 31 dont l'extrémité supérieure est fixée de manière étanche sur le tube interne 32.

Une buse 33 du type représenté sur la figure 1 est fixée à l'extrémité supérieure du tube 31 de manière àpouvoir être alimentée en liquide à très haute pression par l'intermédiaire de l'espace annulaire compris entre les tubes 31 et 32.

Un bouchon étanche 34 comportant un joint 35 est engagé et fixé à l'intérieur de la manchette thermique 15, au-dessus de la fente 20.

Le tube interne 32 est engagé de manière étanche dans le corps du bouchon 34, par sa partie située à l'extérieur du tube 31, de façon que l'ensemble constitué par les tubes 31 et 32 soit monté glissant à l'intérieur de la manchette thermique 15 suivant la direction de l'axe de la manchette et solidaire de la manchette entraînée en rotation à l'intérieur de l'adaptateur 13.

L'extrémité de la buse 33 est dirigée vers la fente 20.

Le balayage alternatif de la surface interne de l'adaptateur 13 par le jet de liquide abrasif sous pression est réalisé par déplacement de la buse 33 le long de la fente 20 et par déplacement en rotation autour de son axe de la manchette 15 à l'intérieur de l'adaptateur.

Les deux déplacements sont réglés de manière à obtenir des conditions de balayage telles que décrites plus haut en référence à la figure 2 ou telles qu'indiquées dans l'exemple qui sera décrit plus loin.

L'eau circulant dans le tube interne 32 s'écoule dans la partie supérieure de la manchette au-dessus du bouchon étanche 34 et remplit la manchette jusqu'à son extrémité supérieure 15a avant de s'écouler dans l'espace annulaire existant entre la manchette 15 et l'adaptateur 13.

On évite ainsi la remontée de particules abrasives du liquide d'usinage dans la partie supérieure de l'adaptateur, au-dessus de la zone en cours d'usinage. Au contraire, les particules abrasives sont entraînées vers le bas et récupérées à la partie inférieure de l'adaptateur.

L'usinage de la surface interne de l'adaptateur 13 dans la zone de la soudure 14, afin d'éliminer les fissures qui ont pu être décelées et de générer une surface sans défaut, doit être réalisé en plusieurs passes successives comme il sera indiqué dans l'exemple décrit ci-dessous.

### Exemple

La surface interne d'un adaptateur de traversée d'un couvercle de cuve d'un réacteur nucléaire à eau sous pression en alliage de nickel présentant des fissures dans la zone de raccordement par soudure a été usinée au jet en trois passes successives avec un balayage alternatif de la pièce tel que décrit de manière générale en référence à la figure 2.

La première et la seconde passes sont des passes d'usinage au jet avec abrasif et la troisième passe est une passe de nettoyage au jet d'eau pure sous haute pression.

La première passe d'usinage ou passe d'ébauche est réalisée dans les conditions suivantes :
Balayage alternatif sur une longueur L = 100 mm
Vitesse de balayage : 2,5 m/mn
Pas d'avance : 0,5 mm
Débit d'abrasif : 750 g/mn
Nature de l'abrasif : olivine de granulométrie 20
Profondeur moyenne d'usinage : 0,824 mm
Taux d'enlèvement de matière : 0,97 cm³/mn
Volume d'effluents liquides : 3,5 dm³/cm³ usinés
Volume d'effluents solides : 0,42 dm³/cm³ usinés
Temps d'usinage : 2 mn 32 s
Surface couverte : 11,84 cm/mn.

La seconde passe d'usinage ou passe de finition est réalisée dans les conditions suivantes :
Balayage alternatif sur une longueur L = 100 mm
Vitesse de balayage : 10 m/mn
Pas d'avance : 0,5 mm
Débit d'abrasif : 750 g/mn
Nature de l'abrasif : olivine de granulométrie 20
Profondeur moyenne d'usinage : 0,242 mm
Taux d'enlèvement de matière : 1,14 cm³/mn
Volume d'effluents liquides : 2,98 dm³/cm³ usinés
Volume d'effluents solides : 0,36 dm³/cm³ usinés
Temps d'usinage : 38 s
Surface couverte : 47,36 cm/mn.

La troisième passe est une passe de nettoyage au jet d'eau, permettant d'éliminer les particules d'abrasif éventuellement incrustées dans la surface usinée.

Le paramètre essentiel est la vitesse de balayage qui est fixée à une valeur quatre fois plus forte pendant la passe de finition que pendant la passe d'ébauche.

L'usinage en plusieurs passes qui permet d'optimiser les conditions d'usinage et d'obtenir une surface usinée de grande qualité est donc réalisé de manière que la vitesse de balayage soit croissante d'une passe d'usinage à la suivante.

Pour éviter des incrustations de grains d'abrasif sur la surface de la pièce usinée, il est préférable, au moins pendant les passes de finition d'utiliser un -abrasif ne renfermant pas de silice.

La lumière 20 à travers la manchette peut être elle-même réalisée par usinage au jet d'eau chargé d'abrasif. Il peut être avantageux de protéger la surface intérieure de l'adaptateur pendant l'usinage, en utilisant un feuillard en tungstène placé entre la manchette et l'adaptateur bien que des traces d'usinage sur la surface de l'adaptateur ne présentent pas réellement un inconvénient dans la mesure où la surface de l'adaptateur doit être réusinée.

En outre, on réalise de préférence, l'usinage de la fente en plusieurs passes. Au cours de la dernière passe, le jet traverse la manchette et débouche en vis-à-vis de la surface de l'adaptateur. L'usinage est effectué de manière que l'épaisseur restante de la paroi de la manchette à l'issue de l'avant-dernière passe soit la plus faible possible.

La capacité d'usinage du jet définie par les paramètres tels que vitesse du jet, débit massique d'abrasif et vitesse de balayage est fixée à une valeur faible, pendant la dernière passe d'usinage.

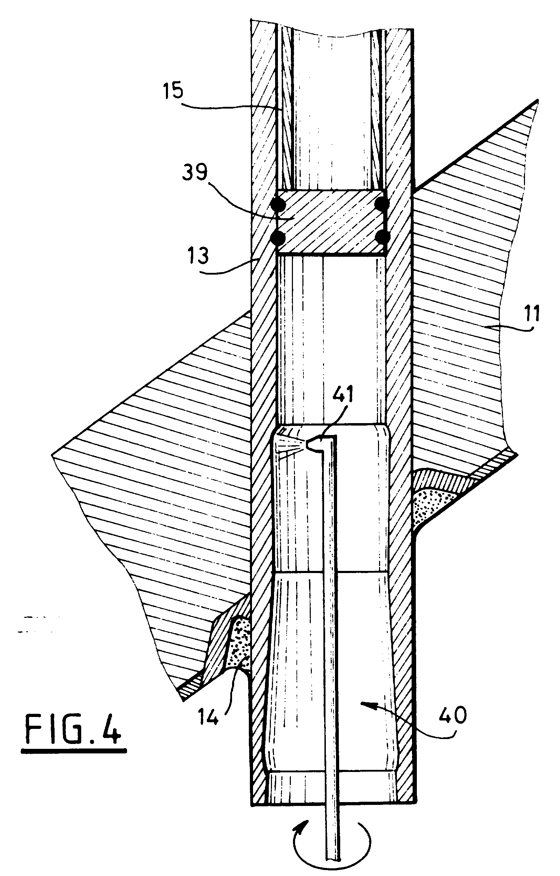

Sur la figure 4, on a représenté un adaptateur de traversée d'un couvercle de cuve dans lequel on réalise un usinage par le procédé de l'invention en utilisant un dispositif suivant une variante de réalisation.

Les éléments correspondants sur les figures 3 et 4 sont désignés par les mêmes repères.

La partie inférieure de la manchette thermique 15 a été tronçonnée et extraite de l'adaptateur 13. En-dessous de la partie restante de la manchette 15, on a placé un bouchon étanche 39.

Le dispositif d'usinage 40 qui est déplacé en rotation autour de l'axe de l'adaptateur et en translation suivant cet axe dans la zone de la soudure 14, comporte un tube alimenté en liquide d'usinage à l'extrémité duquel est fixée une buse 41.

Les conditions d'usinage et de balayage par le jet abrasif sont fixées comme précédemment ; en particulier, l'usinage est réalisé en au moins deux passes successives. La vitesse de balayage est croissante d'une passe d'usinage à la suivante.

Le procédé suivant l'invention permet de réaliser l'usinage à une profondeur contrôlée sous la surface d'une pièce tubulaire avec une très grande régularité et une très grande rapidité d'exécution, pour obtenir une nouvelle surface d'une grande précision et d'une très bonne qualité métallurgique.

Le détensionnement de la pièce permet dans certains cas de supprimer la nécessité de déposer une couche de rechargement sur la pièce après l'usinage superficiel.

Des profils variés d'usinage peuvent être obtenus en modulant les paramètres de l'usinage qui sont relatifs au jet lui-même ou à son déplacement par rapport àla surface de la pièce

Dans le cas de l'application du procédé suivant l'invention à l'affouillement et à la réparation de la surface intérieure d'un adaptateur traversant le couvercle de cuve d'un réacteur nucléaire, le procédé peut être mis en oeuvre à travers une fente dans la paroi de la manchette thermique de l'adaptateur, ce qui évite un démontage long et coûteux ou un tronçonnage de cette manchette.

En outre, les conditions d'usinage au jet peuvent être parfaitement contrôlées, par exemple en utilisant un transducteur ultrasonore qui est couplé à la surface de la pièce par l'intermédiaire du jet de liquide sous pression.

Le procédé suivant l'invention présente également l'intérêt de produire une relaxation des contraintes àl'intérieur de la pièce, par mise en compression de cette pièce par une opération semblable au martelage.

L'invention ne se limite pas aux modes de réalisation qui ont été décrits.

C'est ainsi que le mode de balayage de la surface à usiner et les différents paramètres relatifs au jet et à son déplacement par rapport à la surface de la pièce peuvent être différents de ceux qui ont été indiqués. Le nombre de passes d'usinage peut être supérieur à deux.

On peut utiliser également des particules solides dans des proportions différentes de celles qui ont été données, ces particules solides pouvant avoir une nature chimique et une granulométrie différente de celles qui ont été indiquées ci-dessus.

Enfin, le procédé suivant l'invention s'applique non seulement à l'usinage d'une couche superficielle défectueuse à l'intérieur d'un adaptateur traversant le couvercle de la cuve d'un réacteur nucléaire, mais également à l'usinage de la surface interne de pièces métalliques tubulaires de tout type pour générer une nouvelle surface ayant des caractéristiques géométriques et physiques définies. Cet usinage peut être réalisé uniquement au niveau de défauts isolés tels que des fissures avant un rechargement en métal sain du métal fissuré ou suivant l'ensemble d'une surface de la pièce.

On peut effectuer un usinage suivant le procédé de l'invention sur une surface d'une pièce avant de la soumettre à un traitement de mise en compression et de détensionnement par martelage.

On peut réaliser la mise à nu et la préparation de toute surface métallique à l'intérieur d'un tube avant un traitement ou encore le conditionnement d'une surface non suivi de traitement pour la rendre résistante à l'usure ou à la corrosion.

Le procédé suivant l'invention peut également être adapté au cas de l'usinage superficiel de pièces tubulaires non métalliques.

Le dispositif d'usinage utilisé peut être différent des dispositifs décrits ci-dessus. En particulier, on peut utiliser des dispositifs comportant plusieurs buses d'éjection de liquide abrasif ayant des directions différentes, de manière à diriger sur la surface à usiner, plusieurs jets simultanément.

## Revendications

1. Procédé d'usinage de la surface interne cylindrique d'une pièce tubulaire (13) telle qu'un adaptateur traversant le couvercle (11) de la cuve d'un réacteur nucléaire à eau sous pression, avec enlèvement de matière sur une profondeur contrôlée, pour générer une nouvelle surface présentant des caractéristiques géométriques et physiques déterminées, par érosion sous l'effet d'un jet (4) de liquide à grande vitesse renfermant une matière abrasive pulvérulente, caractérisé par le fait qu'on dirige le jet de liquide vers la surface de la pièce (13) avec un angle d'incidence avec la surface de la pièce compris entre 30 et 90°, qu'on déplace le jet de manière à balayer la surface interne de la pièce tubulaire (13) et qu'on réalise aux moins deux passes successives d'usinage, la vitesse de balayage de la surface de la pièce (13) étant croissante d'une passe à la suivante.

2. Procédé suivant la revendication 1, caractérisé par le fait qu'on réalise successivement :
- une première passe d'usinage par un jet (4) de liquide renfermant la matière pulvérulente abrasive à une première vitesse de balayage,
- une seconde passe d'usinage par un jet de liquide renfermant la matière pulvérulente à une seconde vitesse de balayage supérieure à la première vitesse de balayage,
- et une troisième passe de nettoyage par un jet de liquide sous haute pression sans introduction de matière abrasive dans le jet de liquide.

3. Procédé suivant l'une quelconque des revendications 1 et 2, caractérisé par le fait que le jet (4) de liquide est déplacé sur la surface (5;16) de la pièce à une vitesse comprise entre 1 m/mn et 10 m/mn.

4. Procédé suivant la revendication 2, caractérisé par le fait qu'au cours de la première passe d'usinage ou passe d'ébauche le jet (4) est déplacé à une vitesse voisine de 2,5 m/mn et qu'au cours de la seconde passe d'usinage, ou passe de finition, le jet (4) est déplacé à une vitesse voisine de 10 m/mn.

5. Procédé suivant l'une quelconque des revendications 1 à 4, caractérisé par le fait que la vitesse du liquide dans le jet (4) est voisine de 600 m/s.

6. Procédé suivant l'une quelconque des revendications 1 à 5, caractérisé par le fait que la pression du liquide du jet (4) est voisine de 3500 bars.

7. Procédé suivant l'une quelconque des revendications 1 à 6, caractérisé par le fait que le débit massique de matière pulvérulente abrasive dans le jet (4) est compris entre 400 et 800 g/mn.

8. Procédé suivant l'une quelconque des revendications 1 à 7, caractérisé par le fait que le déplacement du jet (4) au contact de la surface (5) de la pièce (2) est un balayage alternatif suivant des bandes rectilignes (6a, 6b, 6c) juxtaposées avec ou sans recouvrement.

9. Procédé suivant l'une quelconque des revendications 1 à 8, pour l'usinage de la surface intérieure cylindrique d'un adaptateur (13) traversant le couvercle (11) de la cuve d'un réacteur nucléaire et comportant une manchette thermique (15) disposée coaxialement à l'intérieur de l'adaptateur (13), caractérisé par le fait que le jet (4) est dirigé sur la surface intérieure (16) de l'adaptateur (13), depuis l'intérieur de la manchette (15) à travers une fente (20) traversant la paroi de la manchette thermique (15).

10. Procédé suivant la revendication 9, caractérisé par le fait qu'on déplace le jet (4) à l'intérieur de la fente (20) et qu'on déplace la manchette (15) en rotation autour de son axe à l'intérieur de l'adaptateur (13) pour réaliser un balayage de la surface intérieure (16) de l'adaptateur (13) dans une zone défectueuse.

11. Procédé suivant la revendication 9 caractérisé par le fait qu'on découpe une partie de la manchette de manière à rendre accessible la surface interne de l'adaptateur (13) et qu'on déplace le jet en rotation et en translation à l'intérieur de l'adaptateur.

12. Procédé suivant l'une quelconque des revendications 9 et 10, caractérisé par le fait que la fente (20) est réalisée par usinage de la paroi de la manchette thermique (15) par un jet sous pression (4).

13. Procédé suivant l'une quelconque des revendications 1 à 12, caractérisé par le fait qu'on réalise un contrôle de l'épaisseur de la couche superficielle éliminée par le jet (4), par une mesure ultrasonore, en utilisant le jet (4) comme liquide de couplage entre un transducteur ultrasonore et la surface de la pièce métallique (2).

14. Procédé suivant l'une quelconque des revendications 1 à 13, caractérisé par le fait que la matière pulvérulente abrasive est constituée par des particules solides en un matériau tel que le grenat ou l'olivine et présente une granulométrie comprise entre 100 et 1000µm.

15. Utilisation d'un dispositif d'usinage de la surface interne d'un adaptateur (13) traversant le couvercle (11) de la cuve d'un réacteur nucléaire à eau sous pression et dans lequel est disposée une manchette thermique (15) en position coaxiale, caractérisée en ce que le dispositif comporte une buse (33, 41) montée mobile en translation dans la direction de l'axe de l'adaptateur (13) et en rotation autour de l'axe de l'adaptateur, dirigée vers la surface interne de l'adaptateur et reliée à des moyens (31) d'alimentation en liquide abrasif sous pression.

16. Dispositif suivant la revendication 15, caractérisé par le fait que la buse (33) est fixée sur un ensemble tubulaire (30) comportant un tube externe (31) et un tube interne coaxial (32) ayant une partie saillante à l'extérieur du tube externe (31) et qu'il comporte en outre un bouchon (34) fixé de manière étanche dans la manchette thermique (15) de l'adaptateur (13) dans lequel l'ensemble tubulaire (30) est monté mobile en translation et en rotation autour de l'axe de l'adaptateur (13) par l'intermédiaire de la partie saillante du tube interne (32), la buse (33) communiquant avec l'espace annulaire entre les tubes externe (31) et interne (32) qui est alimenté en liquide abrasif sous pression.

17. Dispositif suivant la revendication 16, caractérisé par le fait que le tube interne (32) est alimenté en liquide et ouvert à une extrémité débouchant du côté du bouchon (34) opposé à la buse (33).

## Patentansprüche

1. Verfahren zum spanenden Bearbeiten der inneren Zylinderfläche eines rohrförmigen Teils (13), insbesondere eines den Deckel (11) eines Druckwasserkernreaktorbehälters durchquerenden Adapters, wobei Material über eine kontrollierte Dicke entfernt wird, um eine neue Oberfläche zu erzeugen, die vorbestimmte geometrische und physikalische Eigenschaften aufweist, durch Erosion unter Einwirkung eines Flüssigkeitsstrahls (4) mit hoher Geschwindigkeit, der ein pulverförmiges Schleifmaterial aufweist,
dadurch gekennzeichnet, daß der Flüssigkeitsstrahl auf die Oberfläche des Teils (13) mit einem Einfallswinkel bezüglich der Oberfläche des Teils gerichtet wird, der zwischen 30 und 90° liegt, wobei der Strahl so bewegt wird, daß er die innere Oberfläche des rohrförmigen Teils (13) überstreift und dadurch, daß mindestens zwei aufeinanderfolgende spanende Durchgänge erfolgen, wobei die Geschwindigkeit mit der die Oberfläche des Teils (13) überstrichen wird von einem Durchgang auf den darauf folgenden ansteigt.

2. Verfahren nach Anspruch 1, dadurch gekennzeichnet, daß aufeinanderfolgend durchgeführt werden:
- ein erster spanender Durchgang, mit einem Strahl (4) aus einer Flüssigkeit, die das pulverförmige Schleifmaterial aufweist mit einer ersten Überstreifgeschwindigkeit,
- einem zweiten spanenden Durchgang, mit einem Strahl, der das Schleifmaterial aufweist bei einer Überstreifgeschwindigkeit, die höher ist als die des ersten Durchgangs, und
- einem dritten Säuberungsdurchgang, mit einem Hochdrucktlfüssigkeitsastrahl ohne Einführung des Schleifmaterials in den Flüssigkeitsstrahl.

3. Verfahren nach einem der Ansprüche 1 und 2, dadurch gekennzeichnet, daß der Flüssigkeitsstrahl (4) auf der Oberfläche (5; 16) des Teils mit einer Geschwindigkeit zwischen 1 m/min und 10 m/min bewegt wird.

4. Verfahren nach Anspruch 2, dadurch gekennzeichnet, daß während des ersten spanenden Durchgangs oder der Grobbearbeitung der Strahl (4) mit einer Geschwindigkeit um 2,5 m/min und während des zweiten spanenden Bearbeitungsdurchgangs oder beim Bearbeitungsdurchgang der Strahl (4) mit einer Geschwindigkeit um 10 m/min bewegt wird.

5. Verfahren nach einem der Ansprüche 1 bis 4, dadurch gekennzeichnet, daß die Geschwindigkeit der Flüssigkeit im Strahl (4) um 600 m/s beträgt.

6. Verfahren nach einem der Ansprüche 1 bis 5, dadurch gekennzeichnet, daß der Druck der Flüssigkeit im Strahl (4) um 3500 bar beträgt.

7. Verfahren nach einem der Ansprüche 1 bis 6, dadurch gekennzeichnet, daß der Massendurchsatz des pulverförmigen Schleifmaterials im Strahl (4) zwischen 400 und 800 g/min beträgt.

8. Verfahren nach einem der Ansprüche 1 bis 7, dadurch gekennzeichnet, daß die Bewegung des Strahls (4) in Kontakt mit der Oberfläche (5) des Teils (2) ein Ein- und Herbewegen auf geradlinigen Streifen (6a, 6b, 6c) ist, die nebeneinander mit oder ohne Überdeckung angeordnet sind.

9. Verfahren nach einem der Ansprüche 1 bis 8, zur spanenden Bearbeitung der inneren Zylinderoberfläche eines Adapters (13), der den Deckel (11) eines Kernreaktors durchquert und eine Thermomanschette (15) aufweist, die koaxial zum Inneren des Adapters (13) angeordnet ist, dadurch gekennzeichnet, daß der Strahl (4) auf die innere Oberfläche (16) des Adapters (13) gerichtet ist ausgehend vom Inneren der Manschette (15) durch einen Spalt (20), der die Wandung der Thermomanschette (15) durchquert.

10. Verfahren nach Anspruch 9, dadurch gekennzeichnet, daß der Strahl (4) im Inneren des Spalts (20) bewegt wird und daß die Manschette (15) um ihre Achse im Inneren des Adaptes (13) bewegt wird, um ein Überstreifen der inneren Oberfläche (16) des Adapters (13) ohne fehlerhafte Bereiche durchzuführen.

11. Verfahren nach Anspruch 9, dadurch gekennzeichnet, daß ein Teil der Manschette derart ausgeschnitten wird, daß die innere Oberfläche des Adapters (13) zugänglich wird und daß der Strahl im Inneren des Adapters mit einer Rotations- und einer Translationsbewegung bewegt wird.

12. Verfahren nach einem der Ansprüche 9 und 10, dadurch gekennzeichnet, daß der Spalt (20) durch spanende Bearbeitung der Wandung der Thermomanschette (15) durch einen Druckstrahl (4) erzeugt ist.

13. Verfahren nach einem der Ansprüche 1 bis 12, dadurch gekennzeichnet, daß eine Dickenüberwachung der von dem Strahl (4) entfernten Oberflächenschicht durch eine Ultraschallmessung erfolgt, indem der Strahl (4) als Kuppelflüssigkeit zwischen einem Ultraschallsender und der Oberfläche des Metallstücks (2) verwendet wird.

14. Verfahren nach einem der Ansprüche 1 bis 13, dadurch gekennzeichnet, daß das pulverförmige Schleifmaterial aus festen Partikeln eines Materials wie Granat oder Olivin besteht mit einer Granulametrie zwischen 100 und 1000 µm.

15. Verwendung einer Vorrichtung zur spanenden Bearbeitung der inneren Oberfläche eines Adapters (13), der den Deckel (11) des Behälters eines Druckwasserkernreaktors durchquert und in dem eine Thermomanschette (15) koaxial angeordnet ist, dadurch gekennzeichntet, daß die Vorrichtung eine Düse (33, 41) aufweist, die in Translation in Achsrichtung des Adapters (13 beweglich und in Rotation um die Achse des Adapters beweglich auf die innere Oberfläche des Adapters gerichtet angeordnet ist und mit Mitteln (31) zur Speisung mit der schleifenden Druckflüssigkeit verbunden ist.

16. Vorrichtung nach Anspruch 15, dadurch gekennzeichnet, daß die Düse (33) auf einer Rohranordnung (30) angeordnet ist, die ein äußeres Rohr (31) und ein koaxiales inneres Rohr (32) aufweist, welches einen gegenüber dem äußeren Rohr (31) vorstehenden Teil aufweist, und welches außerdem einen Verschluß (34) aufweist, der dicht in der Thermomanschette (15) des Adapters (13) befestigt ist, in welchem die Rohranordnung (30) mittels des vorstehenden Teiles des Innenrohrs (32) bezüglich Translations- und Roationsbewegung um die Achse des Adapters (13) beweglich angeordnet ist befestigt ist, wobei die Düse (33) mit dem Ringraum zwischen dem äußeren (31) und dem inneren (32) Rohr verbunden ist, der mit der unter Druck stehenden Schleifflüssigkeit gespeist wird.

17. Vorrichtung nach Anspruch 16, dadurch gekennzeichnet, daß das Innenrohr (32) mit der Flüssigkeit gespeist wird und an einem Ende offen ist, welches auf der Seite des Verschlusses (34) gegenüber der Düse (33) mündet.

## Claims

1. Process for machining the cylindrical inner surface of a tubular component (13) such as an adapter passing through the cover (11) of the vessel of a pressurised water nuclear reactor, with removal of material to a prescribed depth, in order to generate a new surface having certain geometric and physical characteristics, by erosion under the effect of a high speed jet (4) of liquid containing a powdered abrasive material, characterised in that the jet of liquid is directed towards the surface of the component (13) at an angle of incidence to the surface of the component of between 30 and 90°, the jet is moved so as to sweep over the inner surface of the tubular component (13) and at least two successive machining passes are carried out, the rate of sweeping the surface of the component (13) increasing from one pass to the next.

2. Process according to claim 1, characterised in that:
a first machining pass with a jet (4) of liquid containing the powdered abrasive material at a first sweeping speed,
a second machining pass with a jet of liquid containing the powdered material at a second sweeping speed higher than the first sweeping speed,
and a third cleaning pass with a high-pressure jet of liquid with no abrasive substance introduced into the jet of liquid are carried out successively.

3. Process according to one of claims 1 and 2, characterised in that the jet (4) of liquid is moved over the surface (5;16) of the component at a speed of between 1 m/min and 10 m/min.

4. Process according to claim 2, characterised in that during the first machining pass, or rough pass, the jet (4) is moved at a speed of about 2.5 m/min and during the second machining pass, or finishing pass, the jet (4) is moved at a speed of about 10 m/min.

5. Process according to any one of claims 1 to 4, characterised in that the speed of the liquid in the jet (4) is about 600 m/s.

6. Process according to any one of claims 1 to 5, characterised in that the pressure of the liquid in the jet (4) is about 3500 bars.

7. Process according to any one of claims 1 to 6, characterised in that the mass flow rate of powdered abrasive material in the jet (4) is between 400 and 800 g/min.

8. Process according to any one of claims 1 to 7, characterised in that the movement of the jet (4) in contact with the surface (5) of the component (2) is an alternate sweep along rectilinear juxtaposed strips (6a, 6b, 6c) which may or may not overlap.

9. Process according to any one of claims 1 to 8, for machining the inner cylindrical surface of an adapter (13) passing through the cover (11) of the vessel of a nuclear reactor and comprising a thermal sleeve (15) arranged coaxially with the inside of the adapter (13), characterised in that the jet (4) is directed on to the inner surface (16) of the adapter (13), from the inside of the sleeve (15) through a slot (20) which passes through the wall of the thermal sleeve (15).

10. Process according to claim 9, characterised in that the jet (4) is moved inside the slot (20) and the sleeve (15) is rotated about its axis inside the adapter (13) in order to sweep the inner surface (16) of the adapter (13) in a defective zone.

11. Process according to claim 9, characterised in that part of the sleeve is cut away so as to give access to the inner surface of the adapter (13) and the jet is moved by rotation and translation inside the adapter.

12. Process according to any one of claims 9 and 10, characterised in that the slot (20) is formed by machining the wall of the thermal sleeve (15) using a pressurised jet (4).

13. Process according to any one of claims 1 to 12, characterised in that the thickness of the surface layer eliminated by the jet (4) is monitored by ultrasonic measurement, using the jet (4) as a coupling liquid between an ultrasonic transducer and the surface of the metal component (2).

14. Process according to any one of claims 1 to 13, characterised in that the powdered abrasive material consists of solid particles of a material such as garnet or olivine and has a particle size of between 100 and 1000 µm.

15. Use of an apparatus for machining the inner surface of an adapter (13) passing through the cover (11) of the vessel of a pressurised water nuclear reactor and wherein a thermal sleeve (15) is arranged coaxially, characterised in that the apparatus comprises a nozzle (33, 41) mounted so as to be translationally movable in the direction of the axis of the adapter (13) and rotationally movable about the axis of the adapter, directed towards the inner surface of the adapter and connected to means (31) for supplying pressurised abrasive liquid.

16. Apparatus according to claim 15, characterised in that the nozzle (33) is fixed to a tube assembly (30) comprising an outer tube (31) and a coaxial inner tube (32), having a projecting part on the outside of the outer tube (31), and it further comprises a stopper (34) fixed in leaktight manner in the thermal sleeve (15) of the adapter (13) in which the tube assembly (30) is mounted to be translationally and rotationally movable about the axis of the adapter (13) via the projecting part of the inner tube (32), the nozzle (33) communicating with the annular space between the outer (31) and inner (32) tubes which is supplied with pressurised abrasive liquid.

17. Apparatus according to claim 16, characterised in that the inner tube (32) is supplied with liquid and open at one end which opens on that side of the stopper (34) which is remote from the nozzle (33).
